# EUROPEAN PATENT APPLICATION

(11) **EP 1 571 133 A1**
(43) Date of publication of application: **07.09.2005**
(21) Application number: 05003700.1
(22) Date of filing: 21.02.2005
(51) Int. Cl.: C03B 37/027

(54) **Apparatus and method for manufacturing optical fiber including rotating optical fiber preforms during draw**

(30) Priority: 01.03.2004 US 791003
(71) Applicant: Furukawa Electric North America Inc., Norcross, GA 30071 (US)
(72) Inventor: Zhou, Zhi, Rensselaer New York 12144 (US)
(74) Representative: Schoppe, Fritz

(57) **Abstract**

Embodiments of the invention include a method and apparatus for manufacturing optical fiber. The optical fiber manufacturing method includes providing an optical fiber preform from which to draw optical fiber, rotating the optical fiber preform about its longitudinal axis as the preform is being passed through the heating zone of a draw furnace, and drawing optical fiber from the rotating preform. Rotating the optical fiber preform in a relatively moderate, controlled manner improves the uniformity of the optical fiber preform geometry as optical fiber is being drawn therefrom, which, in turn, reduces transmission loss and splicing loss in the drawn optical fiber. Rotation of the optical fiber preform is constant or variable, and occurs in one or both directions. Embodiments of the invention also include a method for manufacturing optical fiber in which the preform is rotated as it passes through the furnace and a spin is imparted on optical fiber drawn from the rotated preform. Embodiments of the invention improve overall optical fiber geometry by reducing optical fiber geometric deformities, PMD and their associated optical fiber transmission loss.

## Description

### BACKGROUND OF THE INVENTION

### Field of invention

The invention relates to optical fiber. More particularly, the invention relates to apparatus and methods for manufacturing optical fiber having reduced polarization mode dispersion (PMD) and improved geometric uniformity.

### Description of Related Art

Within the field of optical fiber manufacturing, many techniques have been used to produce optical fiber having improved qualities such as reduced optical loss and reduced polarization mode dispersion (PMD). Many forms of optical fiber loss are attributable to geometrical deformities present in optical fiber, which often result from conventional optical fiber manufacturing processes. In general, optical fibers typically are manufactured in a draw tower by vertically suspending an optical fiber preform and moving it into a draw furnace at a controlled rate. The preform softens in the furnace and optical fiber is drawn from the softened end of the preform rod by a capstan or other appropriate device located at the base of the fiber draw tower.

Conventionally, inhomogeneous material distribution in the preform and/or non-uniform thermo processing (heating and cooling) during the fiber drawing process often cause fiber maladies such as fiber curl, fiber cladding non-circularities, and longitudinal variation of the fiber core region and the fiber cladding region. Such fiber geometric deformities contribute to fiber loss such as loss associated with splicing two optical fibers together, e.g., because of fiber cladding diameter variances between the spliced fibers.

Conventionally, PMD and some fiber geometric deformities are reduced by imparting a spin on the optical fiber after it has been drawn from the optical fiber preform. See, e.g., U.S. Patent No. 5,298,047 and U.S. Patent No. 5,418,881, both of which are assigned to the assignee of this application. However, because many fiber geometric deformities are caused by initial optical fiber preform deformities such as preform ovality and non-circularity of preform cladding regions, spinning optical fiber after it is drawn from the preform may have limited effect on overall fiber geometries.

Another conventional approach to improving fiber PMD is the rapid spinning of optical fiber preforms. See, e.g.. A. Ashkin et al., Applied Optics, Vol. 20(13), p. 2299; A.J. Barlow et al., Applied Optics, Vol. 20(17), p. 2962; and S.C. Rashleigh, Laser Focus, May 1983. However, in these approaches, the preform spin rates needed for advantageous results are in the range from approximately 2400-6000 revolutions per minute (rpm), which spin rates are unsuitably high for commercial fiber production.

Accordingly, it would be desirable to have available a commercially practical method and apparatus for manufacturing optical fiber that improves fiber transmission qualities by reducing fiber geometric deformities, fiber PMD and associated fiber loss.

### SUMMARY OF THE INVENTION

The invention is embodied in a method and apparatus for manufacturing optical fiber having improved transmission qualities. The method includes providing an optical fiber preform from which to draw optical fiber, rotating the optical fiber preform about its longitudinal axis as the preform is passed through the heating zone of a draw furnace, and drawing optical fiber from the rotating preform. Rotating the optical fiber preform in a relatively moderate, controlled manner improves the uniformity of the optical fiber preform geometry as optical fiber is being drawn therefrom, which, in turn, reduces transmission loss and splicing loss in the optical fiber drawn. According to embodiments of the invention, rotation of the optical fiber preform is constant or variable, and is in one or both directions (e.g., clockwise and/or counter-clockwise). Embodiments of the invention also include a method for manufacturing optical fiber in which the optical fiber preform is rotated as it passes through the draw furnace and a spin is imparted on optical fiber after it has been drawn from the rotating preform. Embodiments of the invention improve overall optical fiber geometry by reducing optical fiber geometric deformities, fiber PMD and their associated optical fiber transmission loss.

### BRIEF DESCRIPTION OF THE DRAWINGS

Fig. 1 is a simplified, cross-sectional view of an apparatus for manufacturing optical fiber according to embodiments of the invention; and

Fig. 2 is a simplified block diagram of a method for manufacturing optical fiber according to embodiments of the invention.

### DETAILED DESCRIPTION OF EXEMPLARY EMBODIMENTS

In the following description like reference numerals indicate like components to enhance the understanding of the invention through the description of the drawings. Also, although specific features, configurations and arrangements are discussed hereinbelow, it should be understood that such is done for illustrative purposes only. A person skilled in the relevant art will recognize that other steps, configurations and arrangements are useful without departing from the spirit and scope of the invention.

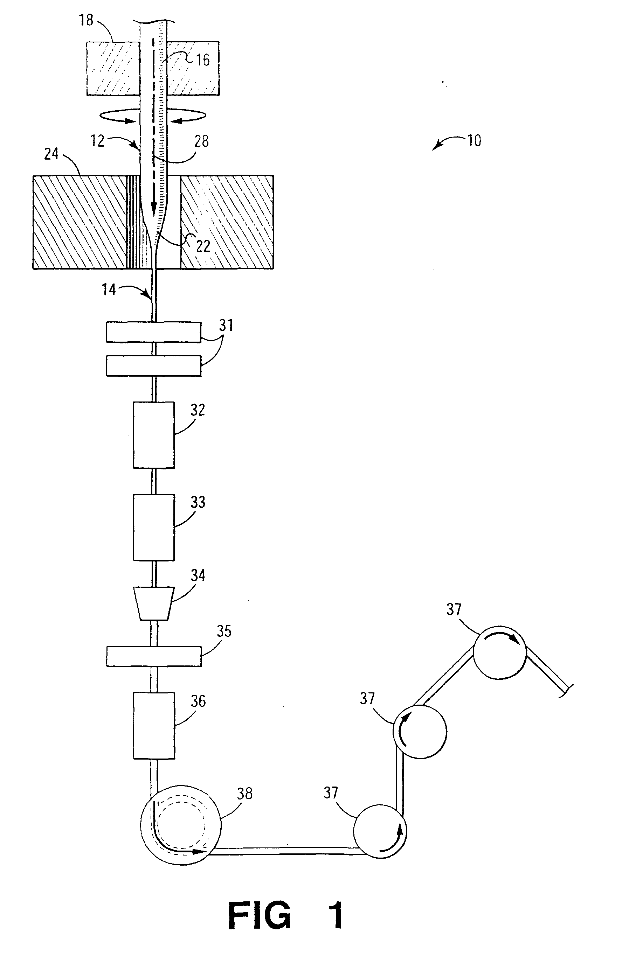

Referring now to Fig. 1, shown is a simplified, cross-sectional view of an apparatus 10 for manufacturing optical fiber according to embodiments of the invention. Typically, optical fiber is manufactured by gradually heating an optical fiber preform 12 and drawing the heated portion of the preform into optical fiber (shown generally as 14). The preform 12 is heated by a heat source such as a furnace or draw furnace 24. The preform 12 typically is vertically suspended from a first end 16 by a chuck 18 or other suitable preform holding device. The chuck 18 controllably lowers a second end 22 of the preform 12 into the furnace 24, which heats that portion of the preform to approximately 2000-2200° Celsius. As the preform 12 passes through the heating zone of the furnace 24, the preform 12 gradually softens to the point where optical fiber is drawn from the softened end of the preform 12 by an appropriate device, e.g., a capstan 37, located beneath the furnace 24.

The preform 12 typically is made of silica glass having a desired dopant profile to alter its refractive index. The preform 12 has a longitudinal axis 28 and includes one or more regions, including, e.g., a core region and one or more protective cladding regions formed around the core region.

Several conventional processes exist for manufacturing optical fiber preforms, including the modified chemical vapor deposition (MCVD) process, the vapor axial deposition (VAD) process, the outside vapor deposition (OVD) process, and the plasma chemical vapor deposition (PCVD) process. Often, the cladding region is increased in size by collapsing one or more overclad tubes around the existing cladding region using the Rod-In-Tube (RIT) process. See, e.g., US 4,820,322, which is co-owned with this application, and hereby is incorporated by reference herein.

Many of the processes used for manufacturing optical fiber preforms and fiber often cause the preforms and/or fiber to be geometrically non-uniform. For example, many of the preforms are not adequately circular, or have core regions that are not circular. Also, drawn fiber is not always perfectly straight under zero tension, which is known as fiber curl. Also, one or more preform cladding regions often do not have consistent diameters and thus are not symmetric about the core region.

Many of these geometric non-uniformities are caused by inhomogeneous material distribution and non-uniform thermo-processing. That is, the draw furnace or other heat source does not provide uniform heating along the circumference throughout the entire preform as the preform is passed through the heating zone of the furnace. Similarly, during subsequent cooling processes, the optical fiber drawn from the heated preform often is not always cooled uniformly along the circumference. Such non-uniform thermo-processing causes the aforementioned geometric non-uniformities, which contribute to reduced transmission performance of the optical fiber. For example, fibers with greater curl and/or uneven cladding diameters contribute to transmission loss of fibers spliced together.

According to embodiments of the invention, rotating the optical fiber preform in a moderate, controlled manner improves the geometric uniformity of the preform regions, which results in optical fiber drawn therefrom that has improved transmission qualities such as reduced optical loss and reduced polarization mode dispersion (PMD). Rotation of the preform is performed prior to fiber being drawn therefrom. According to alternative embodiments of the invention, the preform is rotated and the fiber drawn therefrom is spun as it is cooled, e.g., in the manner discussed in U.S. Patent No. 5,418,881, which is co-owned with this application, and hereby is incorporated by reference herein. Optical fiber manufactured according to embodiments of the invention typically has a PMD coefficient less than approximately 0.2 picoseconds/(kilometer)^{1/2}.

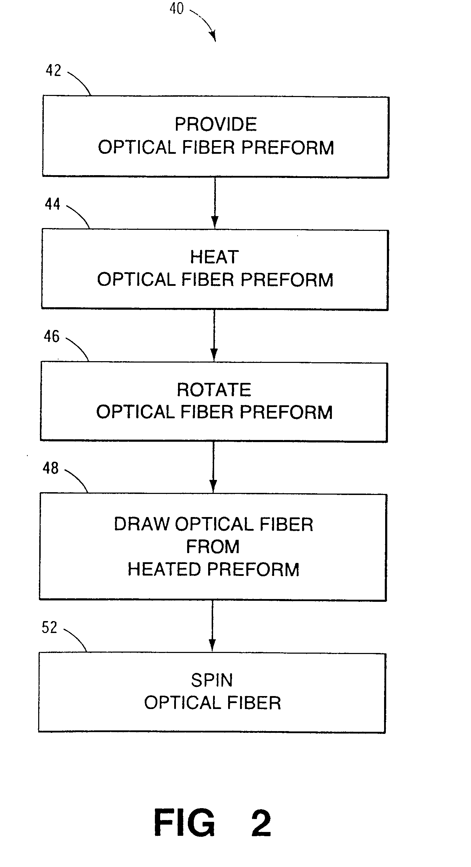

Referring now to Fig. 2, with continuing reference to Fig. 1, shown is a simplified, block diagram of a method 40 for manufacturing optical fiber according to embodiments of the invention. One step 42 of the method 40 is to provide an optical fiber preform 12. As discussed previously herein, the provided preform 12 typically is a glass rod with a longitudinal axis 28 and having a core region surrounded by one or more cladding regions. The preform 12 is made by any of a number of suitable processes, e.g., MCVD, VAD and RIT processes.

Another step 44 of the method 40 is to heat the optical fiber preform 12. The preform 12 is heated by gradually passing the preform 12 through the heating zone of the furnace 24 or other suitable heat source. The preform 12 is secured at its first end 16 by the chuck 18 or other device or mechanism suitable for holding and positioning the preform 12. Typically, the chuck 18 vertically suspends the preform 12 from the first end 16, and gradually lowers the second end 22 of the preform 12 into the furnace 24. As the preform 12 is passed through the heating zone of the furnace 24, the preform 12 gradually softens sufficiently to allow optical fiber to be drawn therefrom.

According to embodiments of the invention, another step 46 of the method 40 is to rotate the optical fiber preform 12 with respect to the heat source 24. Typically, the heat source 24 is stationary, thus, according to embodiments of the invention, the chuck 18 rotates the optical fiber preform 12 about its longitudinal axis 28 as the chuck 18 also moves the preform 12 through the heat zone of the furnace 24.
By rotating the preform 12 with respect to the heat source 24 as the preform 12 passes through the heating zone of the heat source 24, embodiments of the invention provide consistent, uniform heating throughout the entire preform geometry, which uniform heating promotes improved geometries of the preform and of optical fiber drawn from the preform. According to alternative embodiments of the invention, a heat source capable of moderate, controlled rotation rotates about the longitudinal axis 28 of the preform 12 as the optical fiber preform passes linearly through the heating zone of the furnace.

As discussed hereinabove, conventional optical fiber preform manufacturing processes often cause geometric non-uniformities to be built into the preform. Such non-uniformities include non-circular core regions and/or cladding regions, a varying core region diameter along the length of the preform, and non-symmetric cladding regions (e.g., inconsistent cladding diameters along the length of the preform). However, according to embodiments of the invention, rotating the optical fiber preform as it is being heated promotes the softened portions of the preform to become more geometrically uniform.

For example, the rotation of the heated, softened portions of the preform tends to make the various preform regions, e.g., the core region and the cladding region(s), more circular. The rotation of the preform through the heating zone provides consistent, uniform thermal exposure and centrifugal force to the preform, which contribute to various geometric non-uniformities in the softened portions of the preform becoming more geometrically uniform. Thus, geometric non-uniformities that previously were built into the preform during its manufacture are reduced and/or eliminated. For example, the core region and/or the cladding region(s) become more circular, and their respective diameters become more consistent along the length of the preform. Thus, optical fiber drawn from such a preform tends be more uniform geometrically, and thus tends to have lower PMD and less transmission loss that is due to geometric non-uniformities.

According to embodiments of the invention, the chuck 18 rotates the optical fiber preform 12 about its longitudinal axis 28 in a controlled manner, and at a rate within the range from approximately 0 to approximately 600 revolutions per minute (rpm). Conventional discussions of spinning optical fiber preforms speak only of rapid spinning (e.g., 6000 rpm), which is commercially impractical in current fiber manufacturing processes. Thus, although rapid spinning of the preform has been considered conventionally, the commercial infeasibility of such rapid preform spinning has led fiber manufacturers away from manipulating the preform and instead to spinning the fiber once it has been drawn from the preform. See, e.g., U.S. Patent No. 5,418,881.

Also, according to embodiments of the invention, the direction and/or frequency of rotation of the optical fiber preform 12 is constant or variable. For example, in one embodiment of the invention, the rate of rotation of the optical fiber preform is constant and in a single direction (e.g., clockwise). However, embodiments of the invention also allow for rotation in more than one direction, and for the speed and/or direction of the preform rotation to be variable. Thus, according to some embodiments of the invention, the preform is rotated in a first direction (e.g., clockwise) at a constant speed or at varying speeds and/or is rotated in a second direction (e.g., counter-clockwise) at a constant speed or at varying speeds. According to embodiments of the invention, the preform is rotated with any combination of rotation rates (i.e., constant and/or variable) and directions (i.e., clockwise and/or counter-clockwise).

Another step 48 of the method 40 is to draw optical fiber 14 from the preform 12. The drawing step 48 is performed, e.g., in a conventional manner. As the preform 12 passes through the heating zone of the furnace 24, the preform 12 becomes sufficiently soft to allow the capstan 37 or other appropriate device to draw optical fiber 14 from the preform 12. The fiber 14 passes through various conventional devices, e.g., one or more measuring devices 31, an annealing device 32, a cooling device 33, one or more coating dies 34, another measuring device 35, a curing device 36, and a fiber spinning device 38, between the furnace 24 and the capstan 37. The capstan 37 moves the fiber 14 to a take-up reel (not shown), e.g., in a conventional manner.

According to alternative embodiments of the invention, the method 40 includes a step 52 of imparting spin to the optical fiber 14 after the optical fiber 14 has been drawn from the preform 12. The fiber spinning step 52 is performed in a conventional manner, e.g., as discussed in U.S. Patent No. 5,298,047, which is co-owned with this application, and hereby is incorporated by reference herein. Fiber spinning also is discussed, e.g., in U.S. Patent No. 5,418,881, which also is co-owned with this application. As discussed in these references, imparting a spin on optical fiber once it has been drawn from the optical fiber preform reduces PMD in the optical fiber. For example, spin is imparted on the fiber by changing the orientation of the fiber spinning device 38. e.g., by canting the fiber spinning device 38 by an angle around a direction parallel to the draw tower axis.

Thus, according to alternative embodiments of the invention, the optical fiber preform is rotated to improve geometric uniformity in the preform, and optical fiber drawn from the rotated preform is spun to reduce PMD in the fiber. Accordingly, optical fiber manufactured by alternative embodiments of the invention benefit from both the rotation of the preform from which the fiber is drawn and from having spin imparted thereto. That is, the resulting fiber is drawn from a preform that is more uniform geometrically, thus reducing potential sources of transmission loss and splicing loss caused by preform non-uniformities and PMD, and has spin imparted thereto, which reduces PMD. According to embodiments of the invention, the PMD for optical fiber manufactured according to embodiments of the invention is less than approximately 0.2 picoseconds/(kilometer)^{1/2}.

It will be apparent to those skilled in the art that many changes and substitutions can be made to the embodiments of the invention herein described without departing from the spirit and scope of the invention as defined by the appended claims and their full scope of equivalents.

## Claims

1. A method for making an optical fiber, comprising the steps of:
providing an optical fiber preform having a longitudinal axis;
heating at least a portion of the optical fiber preform in a heat source as the optical fiber preform passes therethrough;
rotating the optical fiber preform about its longitudinal axis and with respect to the heat source; and
drawing an optical fiber from the heated, rotated optical fiber preform.

2. The method as recited in claim 1, wherein the rotating step further comprises rotating the optical fiber preform about its longitudinal axis and with respect to the heat source at a rotation rate that is less than approximately 600 revolutions per minute (rpm).

3. The method as recited in claim 1, wherein the rotating step rotates the optical fiber preform about its longitudinal axis and with respect to the heat source at a constant rate of rotation.

4. The method as recited in claim 1, wherein the rotating step rotates the optical fiber preform about its longitudinal axis and with respect to the heat source at a variable rate of rotation.

5. The method as recited in claim 1, wherein the rotating step rotates the optical fiber preform about its longitudinal axis and with respect to the heat source in a first direction of rotation.

6. The method as recited in claim 1, wherein the rotating step rotates the optical fiber preform about its longitudinal axis and with respect to the heat source altematingly between a first direction of rotation and a second direction of rotation opposite that of the first direction of rotation.

7. The method as recited in claim 1, wherein the rotating step further comprises the steps of maintaining the heat source rotationally stationary and rotating the optical fiber preform about its longitudinal axis.

8. The method as recited in claim 1, wherein the rotating step further comprises the steps of maintaining the optical fiber preform rotationally stationary and rotating the heat source about the longitudinal axis of the optical fiber preform.

9. The method as recited in claim 1, further comprising the step of spinning the optical fiber as it is being drawn from the optical fiber preform.

10. The method as recited in claim 1, wherein the optical fiber has a PMD coefficient less than approximately 0.2 picoseconds/(kilometer)^{1/2}.

11. The method as recited in claim 1, wherein the heat source further comprises a furnace.

12. An apparatus for making an optical fiber, comprising:
a heat source for heating an optical fiber preform passing therethrough; and
a chuck for holding one end of the optical fiber preform and passing the optical fiber preform through the heat source,
wherein the optical fiber preform is drawn into an optical fiber, wherein the optical fiber preform has a longitudinal axis, and wherein the apparatus rotates the optical fiber preform about its longitudinal axis and with respect to the heat source as the optical fiber preform passes through the heat source.

13. The apparatus as recited in claim 12, wherein the apparatus rotates the optical fiber preform about its longitudinal axis and with respect to the heat source at a rate of rotation that is less than approximately 600 revolutions per minute (rpm).

14. The apparatus as recited in claim 12, wherein the apparatus rotates the optical fiber preform about its longitudinal axis and with respect to the heat source at a constant rate of rotation.

15. The apparatus as recited in claim 12, wherein the apparatus rotates the optical fiber preform about its longitudinal axis and with respect to the heat source at a variable rate of rotation.

16. The apparatus as recited in claim 12, wherein the apparatus rotates the optical fiber preform about its longitudinal axis and with respect to the heat source in a first direction of rotation.

17. The apparatus as recited in claim 12, wherein the apparatus rotates the optical fiber preform about its longitudinal axis and with respect to the heat source alternatingly between a first direction of rotation and a second direction of rotation opposite that of the first direction of rotation.

18. The apparatus as recited in claim 12, wherein the heat source remains rotationally stationary and the chuck rotates the optical fiber preform about its longitudinal axis as the chuck passes the optical fiber preform through the heat source.

19. The apparatus as recited in claim 12, wherein the chuck remains rotationally stationary and the heat source rotates about the longitudinal axis of the optical fiber preform as the chuck passes the optical fiber preform through the heat source.

20. The apparatus as recited in claim 12, further comprising a spinning device for imparting a spin on the optical fiber being drawn from the optical fiber preform.

21. The apparatus as recited in claim 12, wherein the heat source further comprises a furnace.
